# EUROPÄISCHE PATENTANMELDUNG

(11) **EP 4 269 879 A1**
(43) Veröffentlichungstag der Anmeldung: **01.11.2023**
(21) Anmeldenummer: 23165044.1
(22) Anmeldetag: 29.03.2023
(51) Int. Cl.: F24C 15/20, B03C 3/06

(54) **FILTEREINHEIT FÜR DUNSTABZUGSVORRICHTUNG UND DUNSTABZUGSVORRICHTUNG**

(30) Priorität: 27.04.2022 DE 102022204055
(71) Anmelder: BSH Hausgeräte GmbH, 81739 München (DE)
(72) Erfinder: Hepperle, Georg, 74081 Heilbronn (DE); Hoffmann, Jan, 75059 Zaisenhausen (DE); John, Barbara, 76646 Bruchsal (DE); Vollmar, Daniel, 76327 Pfinztal (DE)

(57) **Zusammenfassung**

Die vorliegende Erfindung betrifft eine Filtereinheit für eine Dunstabzugsvorrichtung, wobei die Filtereinheit (1) mindestens ein Plasmaelektrodenelement (13) umfasst. Die Filtereinheit (1) ist dadurch gekennzeichnet, dass das mindestens eine Plasmaelektrodenelement (13) in einem Gehäuse (10) mit einer Lufteinlassöffnung (102) und mindestens einer Luftauslassöffnung (103) aufgenommen ist, das mindestens eine Plasmaelektrodenelement (13) eine perforierte Struktur aufweist und das mindestens eine Plasmaelektrodenelement (13) zu der Strömungsrichtung (S) geneigt in einem Winkel ungleich 90° Grad in dem Gehäuse (10) angeordnet ist. Zudem wird eine Dunstabzugsvorrichtung mit einer solchen Filtereinheit (1) beschrieben.

## Beschreibung

Die vorliegende Erfindung betrifft eine Filtereinheit für eine Dunstabzugsvorrichtung und eine Dunstabzugsvorrichtung mit einer solchen Filtereinheit.

Bei Dunstabzugsvorrichtungen, wie beispielsweise Dunstabzugshauben, die über einem Kochfeld montiert werden, oder Muldenlüftern, die in oder neben dem Kochfeld montiert werden, die in Küchen verwendet werden, ist es bekannt diese als Abluft-Dunstabzugsvorrichtung oder Umluft-Dunstabzugsvorrichtung zu betreiben oder diese als Umluft-Dunstabzugsvorrichtung auszugestalten. Insbesondere bei Dunstabzugsvorrichtungen, die als Umluft-Dunstabzugsvorrichtung ausgestaltet sind oder als Umluft-Dunstabzugsvorrichtung betrieben werden können, müssen Kochgerüche und insbesondere flüchtige organische Verbindungen (Volatile Organic Compounds (VOC)) aus den Kochwrasen ausgefiltert werden. Dabei ist eine hocheffiziente Luftfiltereinrichtung unerlässlich, da die angesaugte Wrasenluft bei Umluftbetrieb oder Umluftausgestaltung der Dunstabzugsvorrichtung im geschlossenen Raum zirkuliert und nicht ins Freie, das heißt in die Außenluft, ausgeblasen wird.

Für die Geruchsfiltration von Kochdünsten und sonstigen organischen, flüchtigen Verbindungen VOC's werden in der Praxis für den Umluftfall hauptsächlich Aktivkohlefilter oder Zeolithfilter (in der Praxis für Dunstabzüge auch als Umluftfilter bezeichnet) eingesetzt. Diese werden üblicherweise direkt hinter dem Fettfilter, das heißt in Strömungsrichtung noch vor dem Lüfter, verbaut oder im Ausblasbereich des Dunstabzuges in Strömungsrichtung hinter dem Lüfter eingesetzt. Ein Nachteil dieser Filtermedien ist die begrenzte Standzeit, da sich diese Medien über die Betriebszeit des Dunstabzuges zusetzen, was wiederum die Filtereffizienz negativ beeinflusst. Folglich müssen diese Filtermedien aufgrund der begrenzten Standzeit in definierten Intervallen ausgetauscht oder mittels Wärmeeinwirkung regeneriert werden.

Neben diesen genannten Adsorbientien finden in der Praxisanwendung weiterhin Plasmafilter Einsatz, die als autarke Systeme zur Geruchsneutralisation eingesetzt werden. Das Kernstück dieser Plasmafilter bildet die Plasmaelektrode, die das eigentliche Plasma generiert und eine luftundurchlässige Einheit darstellt. Dieses Plasma wird an der Oberfläche der Plasmaelektrode erzeugt und wird daher auch als Oberflächenplasma bezeichnet. Die Luft strömt dabei parallel zu der Erstreckung der Plasmaelektrode. Diese Plasmaelektroden haben den großen Nachteil, dass die an der Plasmaelektrode entlangströmende Luft nicht vollständig mit dem generierten Plasma in Kontakt kommt und die Kochgerüche, insbesondere VOC's, nur eingeschränkt abgebaut beziehungsweise neutralisiert werden. Dies führt zu einer verminderten Filtereffizienz. Ein weiterer Nachteil dieser Plasmaelektroden ist, dass aufgrund der Ausrichtung der luftundurchlässigen Plasmaelektrode ein größerer Bauraum benötigt wird. Insbesondere in der Strömungsrichtung zu der die Plasmaelektroden parallel liegen muss die Abmessung des Plasmafilters groß sein, das heißt eine große Bauraumtiefe aufweisen.

Der vorliegenden Erfindung liegt daher die Aufgabe zugrunde eine Lösung zu schaffen, die die Nachteile des Standes der Technik zumindest teilweise behebt.

Gemäß einem ersten Aspekt betrifft die Erfindung eine Filtereinheit für eine Dunstabzugsvorrichtung, wobei die Filtereinheit mindestens ein Plasmaelektrodenelement umfasst. Die Filtereinheit ist dadurch gekennzeichnet, dass das mindestens eine Plasmaelektrodenelement in einem Gehäuse mit einer Lufteinlassöffnung und mindestens einer Luftauslassöffnung aufgenommen ist, das mindestens eine Plasmaelektrodenelement eine perforierte Struktur aufweist und das mindestens eine Plasmaelektrodenelement in dem Gehäuse zu der Strömungsrichtung geneigt in einem Winkel ungleich 90° Grad angeordnet ist.

Die Dunstabzugsvorrichtung für die die Filtereinheit verwendet wird, kann eine Dunstabzugshaube oder ein Muldenlüfter sein. Als Dunstabzugshaube wird hierbei eine Dunstabzugsvorrichtung bezeichnet, die oberhalb einem Kochfeld oder einer Arbeitsplatte angeordnet ist und die Luft nach oben einsaugt. Als Muldenlüfter wird eine Dunstabzugsvorrichtung bezeichnet, die in oder neben einem Kochfeld angeordnet ist und die Luft nach unten einsaugt. Die Dunstabzugsvorrichtung wird vorzugsweise in einer Küche betrieben.

Als Filtereinheit wird erfindungsgemäß eine Einheit bezeichnet, durch die Geruchsstoffe, insbesondere flüchtige organische Verbindungen (VOC`s) aus der angesaugten Luft ausgefiltert werden können. Die Filtereinheit umfasst mindestens ein Plasmaelektrodenelement. Die Filtereinheit kann auch als Filterkassette, Filtermodul oder Plasmamodul bezeichnet werden. Die Filtereinheit ist vorzugsweise eine vormontierte Baueinheit, die als eine Einheit in die Dunstabzugsvorrichtung eingesetzt und aus dieser entnommen werden kann.

Insbesondere kann die Filtereinheit vorteilhaft bei Dunstabzugsvorrichtungen eingesetzt werden, die im Umluftbetrieb betrieben werden oder betrieben werden können. Das Plasmaelektrodenelement kann mit einer Spannungsquelle verbunden werden, um das zur Reinigung der Luft erforderliche Plasma zu erzeugen. Zu diesem Zweck kann das Plasmaelektrodenelement, die Plasmaelektrodenelemente oder die Filtereinheit Kontakte für den Kontakt mit der Spannungsquelle aufweisen. Die Spannungsquelle in der Dunstabzugsvorrichtung integriert sein und mit dem Plasmaelektrodenelement verbunden werden. Alternativ kann die Spannungsquelle Teil der Filtereinheit sein. Zudem kann die Filtereinheit Befestigungsmittel zur Befestigung in der Dunstabzugsvorrichtung aufweisen.

Das Plasmaelektrodenelement stellt vorzugsweise ein flächiges Element, insbesondere ein ebenes flächiges Element, dar. Das Plasmaelektrodenelement weist vorzugsweise ein als Dielektrikum wirkendes Substrat, eine Hochspannungselektrode und mindestens eine Gegenelektrode auf. In einer bevorzugten Ausführungsform sind das Substrat, die Hochspannungselektrode und die Gegenelektrode jeweils flächig ausgestaltet. Die Hochspannungselektrode und Gegenelektrode(n) können beispielsweise jeweils eine Gitterform aufweisen. Die Gegenelektrode(n) und die Hochspannungselektrode können jeweils vorzugsweise aus korrosionsbeständigen Werkstoffen bestehen, vorzugsweise Silber, Wolfram-, Nickel-Legierungen und/oder Hartgold.

Das Substrat besteht vorzugsweise aus einem elektrisch isolierenden und elektrochemisch korrosionsbeständigen Werkstoff. Das Substrat fungiert zudem als Dielektrikum. Als Dielektrikum wird eine elektrisch schwach- oder nichtleitendes Material bezeichnet: Insbesondere sind in dem Dielektrikum die vorhandenen Ladungsträger nicht frei beweglich. Das Dielektrikum stellt erfindungsgemäß einen Feststoff dar.

Mit dem Plasmaelektrodenelement kann eine dielektrisch behinderte Barriereentladung, die auch als dielektrische Barriereentladung (DBE) bezeichnet wird, erzielt werden. Mit der erfindungsgemäßen Plasmaelektrode kann somit ein nichtthermisches Plasma mittels DBE erzeugt werden. Durch den DBE-Effekt werden olfaktorisch unangenehme Gerüche in der Luft abgebaut beziehungsweise beseitigt, insbesondere wird eine Geruchsbeseitigung von organisch flüchtigen Verbindungen VOCs erzielt.

Das mindestens eine Plasmaelektrodenelement weist erfindungsgemäß eine perforierte Struktur auf. Die Struktur des Plasmaelektrodenelement kann durch das Substrat des Plasmaelektrodenelementes gebildet werden. Das Substrat weist dabei eine flächige Form, insbesondere ebene flächige Form, auf. Insbesondere kann das Substrat die Form einer Platte aufweisen, die zumindest eine Durchlassöffnung aufweist. Die Durchlassöffnung kann auch als Loch oder Bohrung bezeichnet werden. Insbesondere wird als Durchlassöffnung eine Öffnung bezeichnet, die sich zwischen den Stirnflächen des Substrates erstreckt und diese miteinander verbindet. Als Stirnfläche des Substrates wird dabei eine Oberfläche bezeichnet, die die Anströmseite des Substrates oder die Abströmseite des Substrates in dem in der Dunstabzugsvorrichtung eingesetzten Zustand darstellt. Da das Substrat mindestens eine Durchlassöffnung aufweist, kann das Plasmaelektrodenelement auch als perforiertes Plasmaelektrodenelement oder perforierte Plasmaelektrode bezeichnet werden.

Erfindungsgemäß ist das mindestens eine Plasmaelektrodenelement in einem Gehäuse aufgenommen. Das Gehäuse weist eine Lufteinlassöffnung und mindestens eine Luftauslassöffnung auf. Die Luftauslassöffnung kann auch als Luftauslassfläche bezeichnet werden. An der Lufteinlassöffnung kann ein Einlassstutzen vorgesehen sein. Vorzugsweise wird die Filtereinheit über die Lufteinlassöffnung mit dem Gebläse der Dunstabzugsvorrichtung verbunden. An der Lufteinlassöffnung kann ein Eingreifschutzgitter vorgesehen sein, durch den ein unbefugtes Eingreifen in das Gehäuse und insbesondere auf die Plasmaelektrodenelemente verhindert und ein Schutz vor elektrisch spannungsführender Einzelteile der Filtereinheit geboten werden kann.

Das oder die Plasmaelektrodenelemente sind vorzugsweise in dem Gehäuse fixiert, das heißt werden in diesem gehalten.

Das mindestens eine Plasmaelektrodenelement ist erfindungsgemäß zu der Strömungsrichtung geneigt in einem Winkel ungleich 90° Grad in dem Gehäuse angeordnet. Als Strömungsrichtung wird die Richtung bezeichnet, in der die zu reinigende Luft in die Filtereinheit eintritt und diese zumindest im Bereich des mindestens einen Plasmaelektrodenelementes durchströmt. Die Strömungsrichtung liegt vorzugsweise senkrecht zu der Fläche der Lufteinlassöffnung des Gehäuses. Als geneigt wird die Anordnung eines Plasmaelektrodenelementes bezeichnet, die zu diesem nicht parallel liegt, der Winkel α also größer Null ist. Zudem ist der Winkel α erfindungsgemäß ungleich 90°, das heißt das Plasmaelektrodenelement liegt nicht senkrecht zu der Strömungsrichtung. Vorzugsweise ist das mindestens eine Plasmaelektrodenelement in dem in der Dunstabzugsvorrichtung montierten Zustand um nur um eine vertikale Achse in dem beanspruchten Winkel geneigt. Alternativ kann das Plasmaelektrodenelement auch um eine horizontale Achse in dem beanspruchten Winkel geneigt sein.

Indem das mindestens eine Plasmaelektrodenelement in einem Gehäuse mit einer Lufteinlassöffnung und mindestens einer Luftauslassöffnung aufgenommen ist, das mindestens eine Plasmaelektrodenelement eine perforierte Struktur aufweist und das mindestens eine Plasmaelektrodenelement in dem Gehäuse zu der Strömungsrichtung geneigt in einem Winkel ungleich 90° Grad angeordnet ist, kann eine Reihe von Vorteilen erzielt werden.

Insbesondere kann durch die erfindungsgemäße Ausrichtung des Plasmaelektrodenelementes in dem Gehäuse und die perforierte Struktur ein zuverlässiges Durchströmen des Plasmaelektrodenelementes mit der zu reinigenden Luft gewährleistet und gleichzeitig der für die Filtereinheit erforderliche Bauraum minimiert werden. Insbesondere kann die Abmessung des Gehäuses senkrecht zu der Lufteinlassöffnung, die auch als Tiefe bezeichnet werden kann gegenüber einer Filtereinheit, bei der Plasmaelektrodenelemente parallel zu der Strömungsrichtung angeordnet sind, verringert werden. Zudem kann auch die Breite des Gehäuses, das heißt die Abmessung parallel zu der Lufteinlassöffnung, gegenüber einer Filtereinheit, bei der Plasmaelektrodenelemente senkrecht zu der Strömungsrichtung sind, verringert werden.

Zudem kann durch die geneigte Anordnung die perforierte Struktur des Plasmaelektrodenelementes im Vergleich zu einer parallel zu der Strömungsrichtung angeordneten Plasmaelektrodenelementes zuverlässig durchströmt werden. Indem das Plasmaelektrodenelement aber nicht senkrecht zu der Strömungsrichtung liegt, kann ein Passieren von Luft durch die Durchlassöffnungen des Plasmaelektrodenelementes ohne Behandlung durch das Plasma verhindert werden.

Richtungsangaben wie oben oder unten beziehen sich, soweit nicht anders angegeben, auf eine Filtereinheit in einem in der Dunstabzugsvorrichtung montierten Zustand. Als Vorderseite der Filtereinheit wird die Seite bezeichnet, an der die Lufteinlassöffnung an der Filtereinheit vorgesehen ist.

Gemäß einer Ausführungsform umfasst die Filtereinheit mindestens zwei Plasmaelektrodenelemente, vorzugsweise genau zwei Plasmaelektrodenelemente. Indem mehrere Plasmaelektrodenelemente vorgesehen sind, kann die die Fläche, über die das durch Plasmaelektrodenelemente generierte Plasma auf die Luft einwirken kann, vergrößert werden.

Gemäß einer Ausführungsform sind die Plasmaelektrodenelemente in dem Gehäuse parallel zueinander und in Strömungsrichtung hintereinander angeordnet. Durch diese Anordnung kann die Luft in mehreren Stufen hintereinander gereinigt werden.

Gemäß einer Ausführungsform sind zwei oder mehrere Plasmaelektrodenelemente parallel zueinander und in Strömungsrichtung hintereinander in einem Winkel δ zu einer Seitenwand des Gehäuses angeordnet. Der Winkel δ ist insbesondere der stumpfe Winkel, der von der Seitenwand des Gehäuses und der Stirnseite des Plasmaelektrodenelementes, die der Lufteinlassöffnung zugewandt ist, eingeschlossen ist. Die Seitenwand ist dabei vorzugsweise senkrecht zu der Lufteinlassöffnung angeordnet. Der Winkel δ liegt vorzugsweise im Bereich von größer 90° und kleiner 180°.

Gemäß einer weiteren Ausführungsform sind die Plasmaelektrodenelemente in dem Gehäuse in einem Winkel γ zwischen 45° und kleiner 180° zueinander angeordnet. Der Winkel γ ist insbesondere der Winkel zwischen Stirnseiten benachbarter Plasmaelektrodenelemente, die der Lufteinlassöffnung abgewandt sind. Bei dieser Ausführungsform bilden zwei benachbarte Plasmaelektrodenelementen zusammen eine V-Form. Die Spitze der V-Form ist dabei der Lufteinlassöffnung zugewandt. Vorzugsweise liegt die Spitze der V-Form in senkrechter Projektion auf die Fläche der Lufteinlassöffnung in der Mitte der Breite der Lufteinlassöffnung und die freien Enden der V-Form sind direkt oder indirekt an den Seitenwänden des Gehäuses befestigt.

Gemäß einer weiteren Ausführungsform weist die Filtereinheit mindestens ein Mischelement auf, das dem mindestens einen Plasmaelektrodenelement nachgeschaltet, das heißt in Strömungsrichtung nach dem mindestens einen Plasmaelektrodenelement angeordnet ist.

Das Mischelement kann auch als Turbulator bezeichnet werden. Hierdurch kann eine bestmögliche homogene Durchmischung der das Plasmaelektrodenelement durchströmenden Luft mit den im nicht thermischen Plasma erzeugten reaktiven Sauerstoffspezies (reactive oxygen species (ROS)) und reaktiven Stickstoffspezies (reactive nitrogen species (RNS)) gewährleistet werden. Das Mischelement stellt vorzugsweise eine Plattenform dar. Bei dem Mischelement handelt es sich vorzugsweise um ein poröses, luftdurchlässiges oder perforiertes Medium. Beispielsweise besteht das Mischelement aus mindestens einer Lage. Vorzugsweise werden als Mischelement Streckmetall-Lagen, Drahtgewebematten, Lochbleche und grobporige Sinterkunststoffe und/oder Schaumstoff eingesetzt.

In der Ausführungsform, in der das Mischelement dem Plasmaelektrodenelement in Strömungsrichtung nachgeschaltet ist, wird eine optimale Durchmischung der im nichtthermischen Plasma erzeugten reaktiven Sauerstoffspezies (ROS) und reaktiven Stickstoffspezies (RNS) mit der das Plasmaelektrodenelement durchströmenden Luft und den darin befindlichen VOC's und sonstigen Kochgerüchen gewährleistet.

Gemäß einer Ausführungsform ist in dem Gehäuse mindestens ein Halterahmen aufgenommen, in dem mindestens eines der Plasmaelektrodenelemente gehalten ist. Der Halterahmen kann fest mit dem Gehäuse verbunden sein und die Plasmaelektrodenelemente können mit dem Halterahmen lösbar verbunden werden, beispielsweise in diesen eingeschoben oder eingesteckt werden. Dieser Aufbau weist den Vorteil auf, dass die Plasmaelektrodenelemente separat zu dem Gehäuse und Halterahmen gereinigt und gegebenenfalls ausgetauscht werden können.

Gemäß einer Ausführungsform umfasst die Filtereinheit mindestens ein Ozonbarriere-Element. Das Ozonbarriere-Element kann in einem Rahmen in dem Gehäuse der Filtereinheit gehalten werden. Das Ozonbarriere-Element besteht aus einem Medium, das Ozon von dem Austreten aus dem Filtereinheit hindert. Dies ist vorteilhaft, da durch die Plasmaelektrodenelemente Ozon (Os) generiert wird und dieses Ozon nicht in die Umgebung austreten darf. Das Ozonbarriere-Element ist daher dem mindestens einen Plasmaelektrodenelement in Strömungsrichtung nachgeschaltet.

Gemäß einer Ausführungsform besteht das Gehäuse aus einem Plasmaquellengehäuse und einem Ozonbarriere-Gehäuse und das mindestens eine Plasmaquellenelement ist in dem Plasmaquellengehäuse aufgenommen und in dem Ozonbarriere-Gehäuse ist das mindestens ein Ozonbarriere-Element aufgenommen. Das Plasmaquellengehäuse kann einteilig oder mehrteilig ausgestaltet sein. Beispielsweise kann das Plasmaquellengehäuse aus einem Basisteil und einem Deckel, der das Basisteil nach oben abdeckt, bestehen. Vorzugsweise weist das Plasmaquellengehäuse an einer Seite, insbesondere der Vorderseite, die Lufteinlassöffnung auf und ist an der gegenüberliegenden Seite, insbesondere der Rückseite, offen.

Gemäß einer Ausführungsform schließt sich das Ozonbarriere-Gehäuse in Strömungsrichtung an das Plasmaquellengehäuse an und in dem Ozonbarriere-Gehäuse ist die mindestens eine Luftauslassöffnung vorgesehen. Das Ozonbarriere-Gehäuse kann lösbar mit dem Plasmaquellengehäuse verbunden sein. Hierdurch kann das mindestens eine Ozonbarriere-Element, das in dem Ozonbarriere-Gehäuse aufgenommen ist, ausgetauscht werden.

Gemäß einer Ausführungsform weist das Plasmaelektrodenelement ein keramisches Substrat auf, an oder in dem eine Hochspannungselektrode und mindestens eine Gegenelektrode angeordnet sind. Als keramisches Substrat wird ein Substrat aus einem Werkstoff bezeichnet, der einen anorganischen nichtmetallischen Werkstoff darstellt. Als keramisches Substrat wird vorzugsweise ein oxydisches Material bezeichnet. Insbesondere kann Aluminiumoxid (Al₂O₃) als keramisches Substrat verwendet werden.

Durch ein keramisches Substrat der Plasmaelektrodenelement kann ein ausreichender Schutz gegen elektrochemische Korrosion gewährleistet werden. Insbesondere kann der Schutz gegen elektrochemische Korrosion gewährleistet werden, wenn die Elektroden, insbesondere die Gegenelektrode(n) und/oder die Hochspannungselektrode an der Stirnseite des Substrates angeordnet sind, die der Lufteinlassöffnung abgewandt ist. Hierbei stehen die Elektrode(n) nicht ungeschützt und unmittelbar mit der vorbeiströmenden Luft in Kontakt und damit keinen Kontaminationsprozessen, bedingt durch feine in der Luft vorhandenen Aerosolen, ausgesetzt sind, was zu Korrosionsprozessen der Elektrodengeometrie führt und sowohl die Standzeit/Lebensdauer dieser reduziert als auch die Filtereffizienz über der Betriebszeit reduziert. Die Plasmaelektrodenelemente können Plasmaelektrodenelemente aus keramischem (Al₂O₃-Substrat) auf Basis eines Aluminiumoxid-Metall-Verbundes darstellen.

Gemäß einer Ausführungsform weist die Filtereinheit mindestens ein Elektronikgehäuse für die Steuerelektronik, den Hochspannungstransformator / Hochspannungserzeuger und sonstige relevanten Komponenten auf. Das oder die Elektronikgehäuse befinden sich vorzugsweise in den Gehäuse-Seitenbereichen unmittelbar hinter der Lufteinlassöffnung. Die Anordnung des oder der Elektronikgehäuse im Gehäuse der Plasmaquelle ist vorzugsweise so konzipiert, dass die Luftströmung die Filtereinheit ohne signifikante Umlenkungen sowie unnötige/nicht relevante Versperrelemente durchqueren kann.

Gemäß einem weiteren Aspekt betrifft die Erfindung eine Dunstabzugsvorrichtung, die dadurch gekennzeichnet ist, dass die Dunstabzugsvorrichtung mindestens eine erfindungsgemäße Filtereinheit aufweist.

Vorteile und Merkmale, die bezüglich der Filtereinheit beschrieben werden, gelten - soweit anwendbar - entsprechend für die Dunstabzugsvorrichtung und umgekehrt und werden gegebenenfalls nur einmalig beschrieben.

Gemäß einer Ausführungsform umfasst die Dunstabzugsvorrichtung ein Gebläse, das oberhalb der Filtereinheit angeordnet ist und oberhalb des Gebläses ist die Ansaugöffnung der Dunstabzugsvorrichtung angeordnet. In dieser Ausführungsform stellt die Dunstabzugsvorrichtung einen Muldenlüfter dar. Die Filtereinheit kann dabei beispielsweise im Sockelbereich eines Küchenunterschranks, in dem die Dunstabzugsvorrichtung aufgenommen ist, angeordnet sein.

Die Erfindung wird im Folgenden erneut unter Bezugnahme auf die beiliegenden Figuren genauer beschrieben. Es zeigen:
Figur 1: eine schematische perspektivische Ansicht einer Ausführungsform der erfindungsgemäßen Filtereinheit;
Figur 2: eine schematische perspektivische Explosionsansicht der Ausführungsform der Filtereinheit nach Figur 1;
Figur 3: eine schematische perspektivische Ansicht der Ausführungsform der Plasmaelektrodenelemente der Filtereinheit nach Figur 1; und
Figur 4: eine schematische perspektivische Ansicht einer weiteren Ausführungsform der Plasmaelektrodenelemente einer erfindungsgemäßen Filtereinheit.

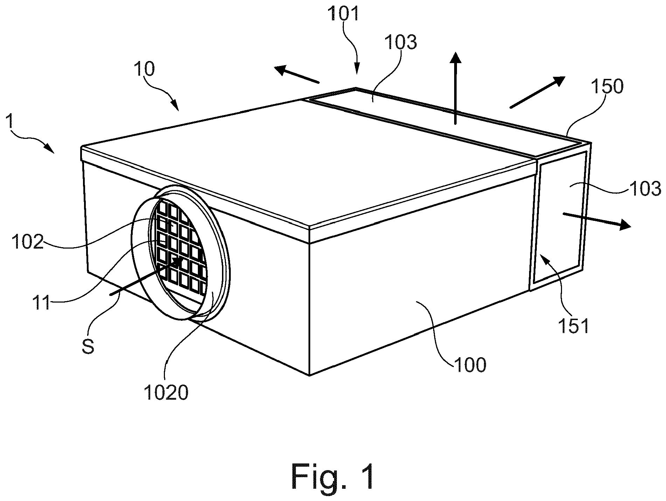

In Figur 1 ist eine Ausführungsform einer Filtereinheit 1 gezeigt. Die Filtereinheit 1 weist in der gezeigten Ausführungsform ein Gehäuse 10 auf, das aus einem Plasmaquellengehäuse 100 und einem Ozonbarriere-Gehäuse 101 besteht. Das Gehäuse 10 weist eine Kastenform auf. An einer Seite, insbesondere der Vorderseite des Gehäuses 10 und insbesondere der Vorderseite des Plasmaquellengehäuses 100 ist eine Lufteinlassöffnung 102 gebildet. In der gezeigten Ausführungsform ist die Lufteinlassöffnung 102 von einem Einlassstutzen 1020 umgeben, der über die Vorderseite des Gehäuses 10 und insbesondere des Plasmaquellengehäuses 100 hinausragt. Die Lufteinlassöffnung 102 ist durch ein Eingreifschutzgitter 11 abgedeckt. In der gezeigten Ausführungsform weist das Plasmaquellengehäuse 100 ein Basisteil und einen dieses nach oben abdeckenden Deckel auf, der lösbar mit dem Basisteil verbunden ist. Das Ozonbarriere-Gehäuse 101 weist einen Rahmen 150 auf, in dem Ozonbarriere-Elemente 151 gehalten sind. Die Ozonbarriere-Elemente 151 bestehen aus einem Medium zur Ozonneutralisation. Durch die Öffnungen in dem Rahmen 150 werden Luftauslassöffnungen 103 des Gehäuses 10 gebildet. Die Ozonbarriere-Elemente 151 decken die Luftauslassöffnungen 103 ab.

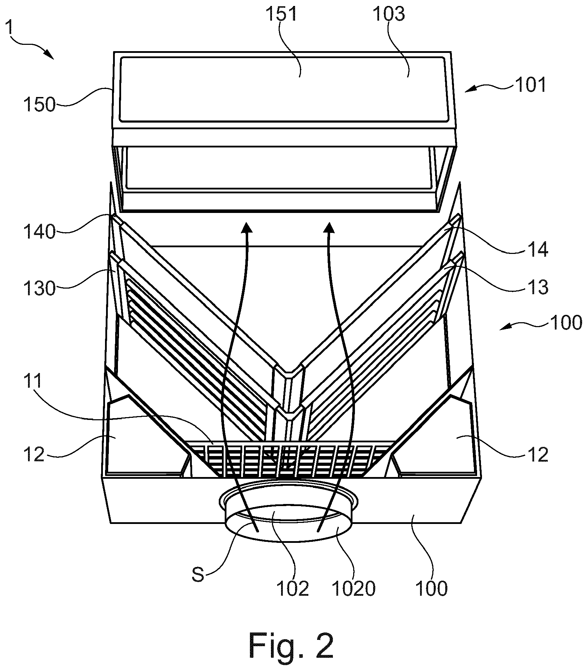

In Figur 2 ist eine schematische Explosionsansicht der Filtereinheit 1 nach Figur 1 gezeigt. In der Figur 2 ist der Deckel des Plasmaquellengehäuses 100 nicht gezeigt. An das Plasmaquellengehäuse 100 schließt sich in Strömungsrichtung ein Ozonbarriere-Gehäuse 101 an. Dieses umfasst einen Rahmen 150 für Ozonbarriere-Elemente 151. In der gezeigten Ausführungsform sind in dem Ozon-Barriere-Gehäuse 101 in dem Rahmen 150 fünf Ozonbarriere-Elemente 151 vorgesehen. Insbesondere erstreckt sich ein Ozonbarriere-Elemente 151 an der Oberseite des Ozonbarriere-Gehäuses 101, eines an der Unterseite, jeweils eines an den Seitenwänden und eines an der Rückseite des Ozonbarriere-Gehäuse 101. Als Rückseite wird hierbei die Seite des Ozonbarriere-Gehäuses 101 bezeichnet, die dem Plasmaquellengehäuse 100 abgewandt ist. Das Ozonbarriere-Gehäuse 101 ist somit nach vorne, das heißt in Richtung des Plasmaquellengehäuses 100 offen.

Das Plasmaquellengehäuse 100 weist eine Kastenform auf, die nach hinten offen ist. In der Vorderseite des Plasmaquellengehäuses 100 ist, wie bezüglich Figur 1 beschrieben, eine Lufteinlassöffnung 102 in einem Einlassstutzen 1020 vorgesehen.

Im Inneren des Plasmaquellengehäuses 100 sind zwei Plasmaelektrodenelemente 13, zwei Mischelemente 14 und ein Eingreifschutzgitter 11 vorgesehen. Der Eingreifschutzgitter 11 verhindert unbefugtes beziehungsweise versehentliches Eingreifen in das Innere des Plasmaquellengehäuses 100 und bietet somit Schutz für den Benutzer vor elektrisch spannungsführenden Einzelteilen. Das Eingreifschutzgitter 11 ist in Strömungsrichtung in der Lufteinlassöffnung 102 und vor den Plasmaelektrodenelementen 13 angeordnet. In der gezeigten Ausführungsform sind die Mischelemente 14 jeweils in Strömungsrichtung nach dem Plasmaelektrodenelement 13 angeordnet. Zudem sind zwei Elektronikgehäuse 12 in dem Plasmaquellengehäuse 100 vorgesehen. Die Elektronikgehäuse 12 sind in der gezeigten Ausführungsform zu der Lufteinlassöffnung 102 benachbart, insbesondere in den vorderen Eckbereichen des Plasmaquellengehäuses 100 angeordnet. Somit befinden sich die Elektronikgehäuse 12 in den Gehäuse-Seitenbereichen unmittelbar hinter der Lufteinlassöffnung 102. Das Elektronikgehäuse 12 kann zur Aufnahme von der Steuerelektronik, des Hochspannungstransformators / Hochspannungserzeugers und sonstige relevanten Komponenten dienen.

In der in Figur 2 gezeigten Ausführungsform sind die Plasmaelektrodenelemente 13 in einer V-Form zueinander angeordnet. Die Plasmaelektrodenelemente 13 sind dazu in einem V-förmigen Halterahmen 130 gehalten. Die Spitze der V-Form ist dabei der Lufteinlassöffnung 102 zugewandt und liegt in der Mitte der Breite der Lufteinlassöffnung 102.

Die Mischelemente 14 sind parallel zu den Plasmaelektrodenelementen 13 angeordnet und sind daher ebenfalls in einer V-Form zueinander angeordnet. Die Mischelemente 14 sind dazu in einem V-förmigen Halterahmen 140 gehalten.

Die Plasmaelektrodenelemente 13 sowie die Mischelemente 14 stehen damit in einem Winkel zu der Strömungsrichtung, die in Figur 2 schematisch gezeigt und mit S bezeichnet ist.

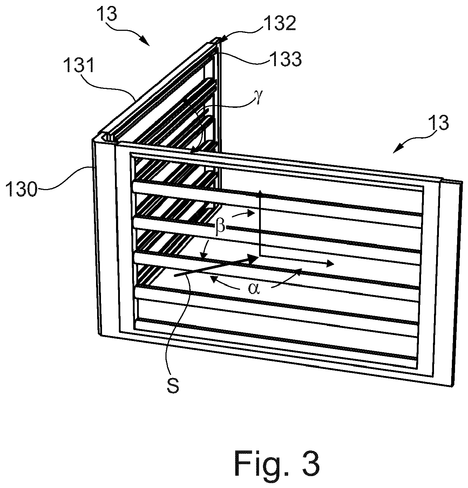

In Figur 3 sind die Plasmaelektrodenelemente 13 mit dem Halterahmen 130 der Filtereinheit 1 nach Figur 2 in perspektivischer Ansicht gezeigt. Wie sich in dieser Ansicht erkennen lässt, weisen die Plasmaelektrodenelemente 13 jeweils eine Form auf, in der zwischen zwei Seitenstreben über die Höhe des Plasmaelektrodenelementes 13 Querstreben verlaufen. Der Halterahmen 130 weist eine V-Form auf. In jedem Schenkel der V-Form des Halterahmens 130 ist ein Aufnahmebereich für ein Plasmaelektrodenelement 13 vorgesehen. Der Aufnahmebereich kann beispielsweise nach oben offen sein, so dass das Plasmaelektrodenelement 13 beispielsweise von oben in den Aufnahmebereich und damit in den Halterahmen 130 eingeschoben werden kann.

Wie sich weiterhin aus Figur 3 ergibt, sind an der Seite jedes der Plasmaelektrodenelemente 13, die dem Innenwinkel der V-Form zugewandt sind, Elektroden vorgesehen. Die Elektroden verlaufen in der dargestellten Ausführungsform entlang den Querstreben des Plasmaelektrodenelementes 13.

Die Struktur des Plasmaelektrodenelementes 13 wird auch als Substrat 131 bezeichnet.

In Figur 3 sind weiterhin der Winkel γ zwischen den Plasmaelektrodenelementen 13 und die Winkel α und β von dem jeweiligen Plasmaelektrodenelement 13 zu der

Strömungsrichtung S gezeigt. Winkel α beschreibt den stumpfen Winkel zwischen der Strömungsrichtung und der Stirnseite des Plasmaelektrodenelementes 13, die der Lufteinlassöffnung zugewandt ist. Der Winkel α liegt vorzugsweise im Bereich von 90° < α < 180°. Hierdurch sind die Plasmaelektrodenelemente 13 um eine Achse geneigt, die senkrecht zu der Strömungsrichtung S in der Höhenrichtung des Plasmaelektrodenelementes 13 steht. Zudem kann das Plasmaelektrodenelement 13 um eine Achse geneigt sein, die in der Breitenrichtung des Plasmaelektrodenelementes 13 liegt. Der Winkel um den das Plasmaelektrodenelement 13 um diese Achse geneigt ist, liegt vorzugsweise im Bereich von 0° < β < 180°. Der Winkel γ der Stirnseiten der beiden Plasmaelektrodenelemente 13, die der Lufteinlassöffnung abgewandt sind, zueinander, in der gezeigten Ausführungsform der spitze Winkel, liegt vorzugsweise zwischen 45° < γ <180°. Alternativ kann der Winkel γ auch einen stumpfen Winkel zwischen den Stirnseiten der beiden Plasmaelektrodenelementen 13 darstellen, die der Lufteinlassöffnung abgewandt sind. In diesem Fall liegt der Winkel γ vorzugsweise in dem Bereich von 180° < γ < 315°.

Wie in Figur 3 gezeigt ist die plasmaerzeugende Stirnfläche 132 der Plasmaelektrodenelemente 13, das heißt die Stirnfläche 132 des Substrates 131, in oder an der die Elektroden 133 vorgesehen sind, vorzugsweise der Luftströmung S abgewandt ("befindet sich im Windschatten"), um diese plasmaerzeugende Stirnfläche 132 vor in der Luft befindlichen Partikeln / Aerosolen zu schützen.

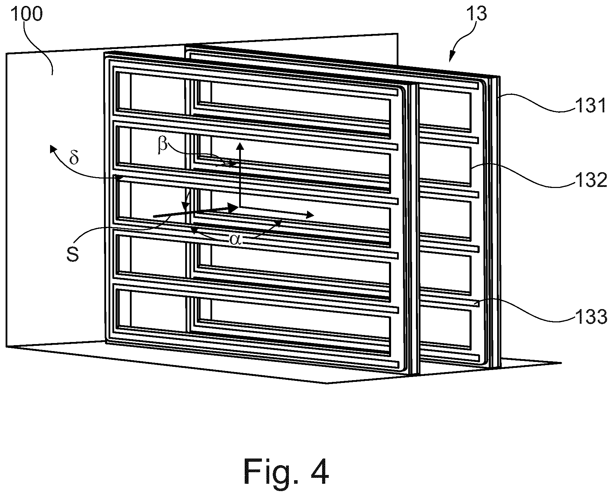

In Figur 4 ist eine alternative Ausführungsform der Anordnung von Plasmaelektrodenelementen 13 gezeigt, die in einem Plasmaquellengehäuse 100 aufgenommen ist. Der Aufbau der Plasmaelektrodenelemente 13 entspricht der in Figur 3 gezeigten Ausführungsform der Plasmaelektrodenelemente 13. Allerdings sind in der Ausführungsform nach Figur 4 die Elektroden 133 an der Seite des Substrates 131 der Plasmaelektrodenelemente 13 vorgesehen, die von der Strömung angeströmt wird, das heißt der Lufteinlassöffnung zugewandt sind.

Zudem unterscheidet sich die Anordnung der Plasmaelektrodenelemente 13 dadurch, dass zwei Plasmaelektrodenelemente 13 parallel zueinander in Strömungsrichtung S in dem Plasmaquellengehäuse 100 hintereinander angeordnet sind. Die Plasmaelektrodenelemente 13 sind in einem Winkel α, der ungleich 90° ist, zu der Strömungsrichtung S geneigt angeordnet. Die Plasmaelektrodenelemente 13 sind bei dieser Ausführungsform direkt mit der Seitenwand des Plasmaquellengehäuses 100 verbunden, beziehungsweise liegen an dieser an.

Der Winkel δ, insbesondere der stumpfe Winkel, der von der Seitenwand des Gehäuses, insbesondere des Plasmaquellengehäuses 100 und der Stirnseite des Plasmaelektrodenelementes 13, die der Lufteinlassöffnung zugewandt ist, eingeschlossen ist, liegt vorzugsweise im Bereich von größer 90° und kleiner 180°.

Die vorliegende Erfindung ist nicht auf die gezeigten Ausführungsformen beschränkt.

Die vorliegende Erfindung betrifft insbesondere eine Filtereinheit, die auch als Plasmamodul bezeichnet werden kann, für einen Dunstabzug und sonstige Hausgeräte zur Geruchsneutralisation mit mindestens einem perforiert ausgestalten (luftdurchlässigen) angeordneten Plasmaelektrodenelement, das in Strömungsrichtung sowohl nebeneinander als auch hintereinander angeordnet sein kann, das heißt parallel oder in Reihe verschaltet werden kann. Hinsichtlich der Elektrode wird vorzugsweise auf die keramische Plasmaelektrode auf Basis eines Aluminiumoxid-Metall-Verbunds Bezug genommen.

Mittels dem Prinzip der dielektrischen Barriereentladung wird an dem mindestens einen Plasmaelektrodenelement ein nichtthermisches Oberflächenplasma generiert, das der durch das Plasmaelektrodenelement hindurchströmenden Luft beigemengt wird. Um das erzeugte nichtthermische Plasma mit der Wrasenluft optimal zu durchmischen, wird vorzugsweise mindestens ein Mischelement dem mindestens einen Plasmaelektrodenelement nachgeschaltet, das in einem dafür vorgesehenen Halterahmen befestigt ist. Aufgrund der Tatsache, dass das Plasmaelektrodenelement Ozon (Os) generiert und dieses Ozon nicht außerhalb der Filtereinheit in die Umgebung austreten darf, wird vorzugsweise eine Ozonbarriere nachgeschaltet. Das Gehäuse der Ozonbarriere besteht vorzugsweise aus einem Gehäuserahmen, in welches das Medium zur Ozonneutralisation integriert ist.

Die vorliegende Erfindung weist eine Reihe von Vorteilen auf.

Die Luftströmungsrichtung durch die Filtereinheit ist vom Einlass bis zum Auslass gerade, ohne Umlenkungen der Luftströmung. Dadurch werden Durckverluste Δp [Pa] bedingt durch Strömungsumlenkungen vermieden. Dies wiederum wirkt sich positiv auf das Geräusch aus, da zusätzliche ungewollte Geräuschquellen vermieden werden.

Die perforierten Plasmaelektrodenelemente auf Basis eines Aluminiumoxid-Metall-Verbunds sorgt für eine gleichmäßige Verteilung des nichtthermischen Plasmas über der Stirnfläche der Plasmaelektrode und eine bessere Durchmischung der mit VOC`s beladenen Luft mit dem erzeugten Plasma beziehungsweise den im Plasma befindlichen reaktiven Sauerstoffspezies (ROS) und den reaktiven Stickstoffspezies (RNS) im Vergleich zu bekannten, nicht perforierten Plasmaelektrodenelementen.

Wird die plasmaerzeugende Stirnfläche der Luftströmung abgewandt, also ein Windschatten erzeugt, kann die Effizienz der Plasmaelektrodenelement sowie die gesamte Standzeit der Filtereinheit verlängert werden. Die Ausfallwahrscheinlichkeit sinkt.

Zudem wird eine Bauraumeinsparung, speziell in Luftströmungsrichtung erzielt. Im Gegensatz zu klassischen nicht perforierten keramischen Plasmaelektroden benötigt diese Anordnung weniger Bauraumtiefe in Luftströmungsrichtung.

Durch die homogene Durchmischung des Plasmas mit der Luft ist auch das darin befindliche Ozon homogen verteilt. Dies führt zu dem Vorteil, dass das Medium zur Ozonneutralisation über seiner gesamten luftdurchlässigen Stirnfläche gleichmäßig mit Ozon beaufschlagt wird. Es entstehen keine partiellen Ozon-"Hotspots" über dem Medium zur Ozonneutralisation. Die Standzeit/Haltbarkeit des Mediums zur Ozonneutralisation wird dadurch erhöht.

### BEZUGSZEICHEN

- 1: Filtereinheit
- 10: Gehäuse
- 100: Plasmaquellengehäuse
- 101: Ozonbarriere-Gehäuse
- 102: Lufteinlassöffnung
- 1020: Einlassstutzen
- 103: Luftauslassöffnung
- 11: Eingreifschutzgitter
- 12: Elektronikgehäuse
- 13: Plasmaelektrodenelement
- 130: Halterahmen für Plasmaelektrodenelement
- 131: Substrat
- 132: Stirnfläche
- 133: Elektrode
- 14: Mischelement
- 140: Halterahmen für Mischelement
- 150: Rahmen für Ozonbarriere-Elemente
- 151: Ozonbarriere-Element

- S: Strömungsrichtung
- α: Winkel
- β: Winkel
- γ: Winkel
- δ: Winkel

## Patentansprüche

1. Filtereinheit für eine Dunstabzugsvorrichtung, wobei die Filtereinheit (1) mindestens ein Plasmaelektrodenelement (13) umfasst, **dadurch gekennzeichnet, dass** das mindestens eine Plasmaelektrodenelement (13) in einem Gehäuse (10) mit einer Lufteinlassöffnung (102) und mindestens einer Luftauslassöffnung (103) aufgenommen ist, das mindestens eine Plasmaelektrodenelement (13) eine perforierte Struktur aufweist und das mindestens eine Plasmaelektrodenelement (13) zu der Strömungsrichtung (S) geneigt in einem Winkel (γ) ungleich 90° Grad in dem Gehäuse (10) angeordnet ist.

2. Filtereinheit nach Anspruch 1, wobei die Filtereinheit (1) mindestens zwei Plasmaelektrodenelemente (13) umfasst.

3. Filtereinheit nach Anspruch 2, wobei die Plasmaelektrodenelemente (13) in dem Gehäuse (10) parallel zueinander und in Strömungsrichtung (S) hintereinander angeordnet sind.

4. Filtereinheit nach einem der Ansprüche 2 oder 3, wobei zwei Plasmaelektrodenelemente (13) in dem Gehäuse (10) in einem Winkel γ zwischen 45° und kleiner 180° zueinander angeordnet sind.

5. Filtereinheit nach Anspruch 4, wobei wie Plasmaelektrodenelemente (13) eine V-Form bilden und die Spitze der V-Form der Lufteinlassöffnung (102) zugewandt.

6. Filtereinheit nach einem der Ansprüche 1 bis 5, wobei die Filtereinheit (1) mindestens ein Mischelement (14) aufweist, das dem mindestens einen Plasmaelektrodenelement (13) nachgeschaltet ist.

7. Filtereinheit nach einem der Ansprüche 1 bis 6, wobei in dem Gehäuse (10) mindestens ein Halterahmen (130) aufgenommen ist, in dem mindestens eines der Plasmaelektrodenelemente (13) gehalten ist.

8. Filtereinheit nach einem der Ansprüche 1 bis 7, wobei die Filtereinheit (13) mindestens ein Ozonbarriere-Element (151) umfasst.

9. Filtereinheit nach Anspruch 8, wobei das Gehäuse (10) aus einem Plasmaquellengehäuse (100) und einem Ozonbarriere-Gehäuse (101) besteht und das mindestens eine Plasmaquellenelement (13) in dem Plasmaquellengehäuse (100) aufgenommen ist und in dem Ozonbarriere-Gehäuse (100) das mindestens ein Ozonbarriere-Element (151) aufgenommen ist.

10. Filtereinheit nach Anspruch 9, wobei das Ozonbarriere-Gehäuse (101) sich in Strömungsrichtung (S) an das Plasmaquellengehäuse (100) anschließt und in dem Ozonbarriere-Gehäuse (101) die mindestens eine Luftauslassöffnung (102) vorgesehen ist.

11. Filtereinheit nach einem der Ansprüche 1 bis 10, wobei das Plasmaelektrodenelement (13) ein keramisches Substrat aufweist, an oder in dem eine Hochspannungselektrode und mindestens eine Gegenelektrode angeordnet sind.

12. Dunstabzugsvorrichtung **dadurch gekennzeichnet, dass** diese mindestens eine Filtereinheit (1) nach einem der Ansprüche 1 bis 11 aufweist.

13. Dunstabzugsvorrichtung nach Anspruch 12, wobei die Dunstabzugsvorrichtung ein Gebläse umfasst, das oberhalb der Filtereinheit (1) angeordnet ist und oberhalb des Gebläses die Ansaugöffnung der Dunstabzugsvorrichtung angeordnet ist.
